# EUROPÄISCHE PATENTSCHRIFT

(11) **EP 3 523 167 B1**
(45) Veröffentlichungstag und Bekanntmachung des Hinweises auf die Patenterteilung: **15.07.2020**
(21) Anmeldenummer: 17768132.7
(22) Anmeldetag: 18.09.2017
(51) Int. Cl.: B60T 13/04, B60T 13/74, F16D 55/16, F16D 65/14

(54) **STEUERVERFAHREN EINER ELEKTROMAGNETISCHE BREMSE MIT EINER STEUERBAREN ANKERSCHEIBENBEWEGUNG SOWIE -BREMSE**
METHOD FOR CONTROLLING AN ELECTROMAGNETIC BRAKE BY CONTROLLING THE ANCHOR PLATE MOVEMENT AND -BRAKE
PROCÉDÉ DE CONTROLE D'UN FREIN ÉLECTROMAGNÉTIQUE AVEC COMMANDE D'UNE RONDELLE D'INDUIT, ET UN TEL FREIN

(30) Priorität: 07.10.2016 DE 102016119027
(43) Veröffentlichungstag der Anmeldung: 14.08.2019
(73) Patentinhaber: Chr. Mayr GmbH + Co. KG, 87665 Mauerstetten (DE)
(72) Erfinder: UNSIN, Karl, 86860 Beckstetten (DE); KRAMKOWSKI, Mathias, 86989 Steingaden (DE); RÄDEL, Rudolf, 87656 Germaringen (DE)
(74) Vertreter: Ruschke, Hans Edvard
(86) Internationale Anmeldenummer: PCT/EP2017/073419
(87) Internationale Veröffentlichungsnummer: WO 2018/065193

(56) Entgegenhaltungen:
- EP-B1- 0 876 559
- WO-A1-2005/066982
- DE-A1- 3 024 059
- DE-A1- 4 416 500
- DE-U- 7 142 492

## Beschreibung

Die vorliegende Erfindung betrifft ein Verfahren zur Steuerung einer elektromagnetischen Bremse, insbesondere Federdruckbremse bestehend unter anderem aus einem Spulenträger mit mindestens einem kraftausübenden Element bspw. mindestens einer Druckfeder, mindestens einer Magnetspule und einer Ankerscheibe, wobei die Oberflächen von Innenpol und Außenpol an Spulenträger und Ankerscheibe einen variierenden Gradienten aufweisen. Die Geschwindigkeit der Bewegung der Ankerscheibe im Hubbereich der Federdruckbremse wird über die Änderung des verketteten magnetischen Flusses aufgrund einer bestehenden Gegenkopplung zwischen Magnetkraft der Magnetspule und einer zweiten entgegengesetzt gerichteten Kraft des mindestens einen kraftausübenden Elements im Hubbereich der Bremse steuerbar. Hierbei kann die zweite Kraft beispielsweise die Federkraft von mindestens einer Druckfeder sein. Die Gegenkopplung von Magnetkraft und Federkraft wird beim Anregen eines Magnetfelds aufgrund der Poloberflächen mit variierendem Gradienten auf dem Spulenträger und der Ankerscheibe erzeugt, wodurch bei kleinen Luftspalten eine Verkleinerung und bei großen Luftspalten eine Vergrößerung der Magnetkraft im Vergleich zu einer Geometrie ohne variierende Gradienten der Poloberflächen erreicht wird.

In dem Gebrauchsmuster DE 7142 492 wird ein Bremslüftmagnet offenbart, in dem der Hubmagnet aus einer Erregerspule, die von dem Eisenrücken zur Führung des magnetischen Flusses umschlossen ist, und einem Tauchanker bzw. Ankerkolben besteht, der mit einer Stoßstange fest verbunden ist zur Übertragung der magnetischen Kräfte. Der Polkern weist in seiner dem Kolben zugewandten Stirnseite zwei oder mehr Stufen auf, ebenso weist der Tauchanker an der dem Polkern 6 zugewandten Seite ebenfalls zwei Stufen auf. Die zwei Stufen des Polkerns bzw. des Tauchankers entsprechen sich wie Matritze zu Patritze, so dass der Tauchanker in den Polkern nahezu spielfrei einlaufen kann. Bei elektrischer Erregung der Spule wirkt hierbei auf den Kolben eine Kraft. Legt der Tauchanker einen Hub zurück, so schlägt dieser mit seiner Stirnwand auf den Polkern auf, Durch die stufenförmige Ausführung von Polkern und Tauchanker ergibt sich eine Magnetkraft-Luftspalt-Kennlinie, die sich an die Belastungslinie anpasst. Das Dokument WO 2005/066982 A1 beschreibt einen elektromagnetischen Lineartrieb mit einem kraftausübenden Element.

Die DE 30 24 059 beschreibt einen Elektrohubmagneten mit einer Magnetspule, die mit Gleichstrom oder Wechselstrom betrieben werden kann, sowie einen längs verschiebbaren Anker und einen magnetischen Gegenpol, wobei die einander zugewandten Seiten von Anker und Gegenpol eine Stufung aufweisen, in deren Bereich eine Verdichtung von Kraftlinien des Magnetfeldes auftritt. Durch diesen Aufbau ergibt sich eine Magnetkrafthubkennlinie, welche bei einem geringen Luftspalt ein Maximum aufweist, bei danach zunehmendem Luftspalt eine geringer werdende Kraft beschreibt, bis die Kraft ein relatives Minimum beschreibt mit der Steigung Null, und im weiteren Verlauf mit ansteigendem Luftspalt die Magnetkraft wieder zunimmt.

In der DE 44 16 500 wird ein Gleichstrom-Hubmagnet beschrieben. Die Aufgabe wird darin gesehen, eine möglichst große Hubarbeit in kleinstem Bauvolumen zu realisieren, wobei eine zweckmäßige Anpassung der magnetischen Hubkraftlinie an die Bedarfskennlinie gewünscht ist. Hierbei werden Zylinderkörper und Hohlzylinderkörper von Ankergegenstück und Anker jeweils unterschiedlich lang ausgebildet, wobei die Gesamtlänge der beiden Hohlzylinderkörper und der beiden Zylinderkörper von Anker und Ankergegenstück gleich groß ist und der Anker und / oder das Ankerstück gegeneinander bewegbar sind und mit einem etwa annähernd mittig liegenden Steuer-Doppelsteuerkonus oder einer abgestuften Wandung ausgestattet sind.

Die Aufgabenstellung der vorliegenden Erfindung wird demgegenüber darin gesehen, die Bewegung der Ankerscheibe in einer elektromagnetischen Bremse so zu steuern, dass die Ankerscheibe mit einstellbarer Geschwindigkeit im Hubbereich bewegbar ist. Die Aufgabe wird mit den Merkmalen des Hauptanspruches gelöst. Dies wird dadurch erreicht, dass das Verhältnis aus Magnetkraft der Magnetspule und der zweiten Kraft des kraftausübenden Elements während der Bewegung der Ankerscheibe im Hubbereich aufgrund der Variation der Anregung der Magnetspule mindestens einmal zwischen größer und kleiner eins variiert.

Aufgrund der Poloberflächen mit variierendem Gradienten auf dem Spulenträger und der Ankerscheibe wird beim Anregen eines Magnetfelds eine Deformation der Magnetkraft-Luftspalt-Kennlinien im Vergleich zu Magnetkraft-Luftspalt-Kennlinien in einer konventionellen Federdruckbremse (d.h. planare Poloberflächen auf Spulenträger und/oder Ankerscheibe) bei jeweils konstantem verkettetem magnetischen Fluss erzeugt. Dadurch wird Magnetkraft von kleinen Luftspalten hin zu großen Luftspalten verschoben. Durch diese Optimierung der Magnetkraftverteilung kann die bekannte Mitkopplung aus Magnetkraft und Federkraft bei der Bewegung der Ankerscheibe durch eine Gegenkopplung von Magnetkraft und Federkraft ersetzt werden. In einer konventionellen Federdruckbremse nehmen die Magnetkraft-Luftspalt-Kennlinien bei konstantem verkettetem magnetischen Fluss bei steigendem Luftspalt mit einer stetig abnehmenden Funktion ab. Die Bewegung der Ankerscheibe findet somit bei einer konventionellen Federdruckbremse zu ihrer geöffneten bzw. geschlossenen Position hin jeweils im Bereich der Mitkopplung aus Magnetkraft und Federkraft statt. Die Ankerscheibe wird während der Bewegung im gesamten Hubbereich zunehmend beschleunigt.

Ein Vorteil der Bremse mit dem erfinderischen Ansteuerverfahren ist, dass im Vergleich zum Stand der Technik aufgrund der optimierten Magnetkraftverteilung eine Federkrafterhöhung bei gleichem Ankerscheibenhub möglich ist, und zwar durch Anpassung der Federkraft-Luftspalt-Kennlinie an die Magnetkraft-Luftspalt-Kennlinie. Dies führt zu einer höheren Leistungsdichte der Bremse.

Vorteilhaft an einer Bremse mit variierenden Poloberflächen ist die Möglichkeit, eine stabil steuerbare Ankerscheibenbewegung zu erhalten und damit eine elektronisch gedämpfte Bremse ohne ein externes Positionssignal der Ankerscheibe (Wegsensoren) bauen zu können. Daneben ist die beschriebene Beeinflussung der Ankerscheibenbewegung, also die Dämpfung, zu- und abschaltbar bzw. insoweit über die Art der Bestromung (Anregung der Magnetspule) variierbar, dass je nach Bedarf und Anwendungsgebiet der Bremse eine passende Einstellung gewählt werden kann, wodurch entweder eine optimierte Schaltzeit, eine minimierte Geräuschentwicklung der Bremse oder ein optimiertes Bremsmoment möglich ist bzw. ein Kompromiss aus den genannten Zielsetzungen.

Im Stand der Technik bekannte Federdruckbremsen mit mechanischen Dämpfern, wie beispielsweise die EP 0876 559 B1, weisen elastische Ringe als Mittel zur Dämpfung von Schlägen, Schwingungen und insbesondere Geräuschen auf. Diese Ringe sind in Ausnehmungen eines mechanischen Elements eingelegt, das gegenüber einem anderen mechanischen Element ein Übermaß zur Erzeugung einer Vorspannung aufweist. Im Vergleich hierzu weist die Erfindung den Vorteil auf, dass das Dämpfungsverhalten der Bremse unabhängig von der Temperatur und von der Lebensdauer der verwendeten Dämpfer ist. Des Weiteren entfällt bei dieser Erfindung die im Vergleich zu anderen im Stand der Technik bekannten Federdruckbremsen zeitaufwendige Einstellung der Dämpfer.

Ein weiterer Vorteil ist, dass der mechanische Ausnutzungsgrad der Federdruckbremse verbessert wird, der als Verhältnis aus der genutzten Energie bei der Bewegung der Ankerscheibe zu der im Hubbereich magnetisch verfügbaren Energie definiert ist. Vergleicht man hierbei eine für dieses Verfahren beanspruchte Federdruckbremse mit einer konventionellen Federdruckbremse und nimmt als Auslegungskriterium für die Federkraft bei einem zuvor definierten Hub jeweils die gleiche Magnetkraftreserve, so ist der mechanische Ausnutzungsgrad einer für dieses Verfahren beanspruchten Federdruckbremse stets größer als bei einer konventionellen Bremse.

Durch die einstellbare Variation des Kräfteverhältnisses zwischen Federkraft und Magnetkraft mittels des einstellbaren verketteten magnetischen Flusses bzw. Stroms ist es möglich das Bremsmoment, welches durch die Feder gegeben ist, zu variieren, indem die gegen die Kraft der Federn gerichtete Magnetkraft erhöht wird, was zu einer Entlastung der Reibfläche führt, wodurch das Bremsmoment verringert wird. Die andere Möglichkeit ist, die gegen die Kraft der Federn gerichtete Magnetkraft zu erniedrigen, was zu einer weiteren Belastung der Reibfläche führt, wodurch das Bremsmoment erhöht wird.

Ein weiterer Vorteil der vorliegenden Erfindung im Vergleich zur Bremsmomenteinstellung einer konventionellen Bremse ist, dass durch die steuerbare Bewegung der Ankerscheibe und dem dadurch möglichen langsamen Auftreffen der Ankerscheibe auf dem Bremsbelag nahezu kein sofortiges Bremsmoment (Momentpeak) beim Aufprall der Ankerscheibe auf dem Reibbelag entsteht, wie es bei einer konventionellen Bremse der Fall ist.

Weitere vorteilhafte Details der Erfindung ergeben sich aus den Unteransprüchen sowie aus der Beschreibung der nachstehend genannten Zeichnungen.

### Figurenbeschreibung

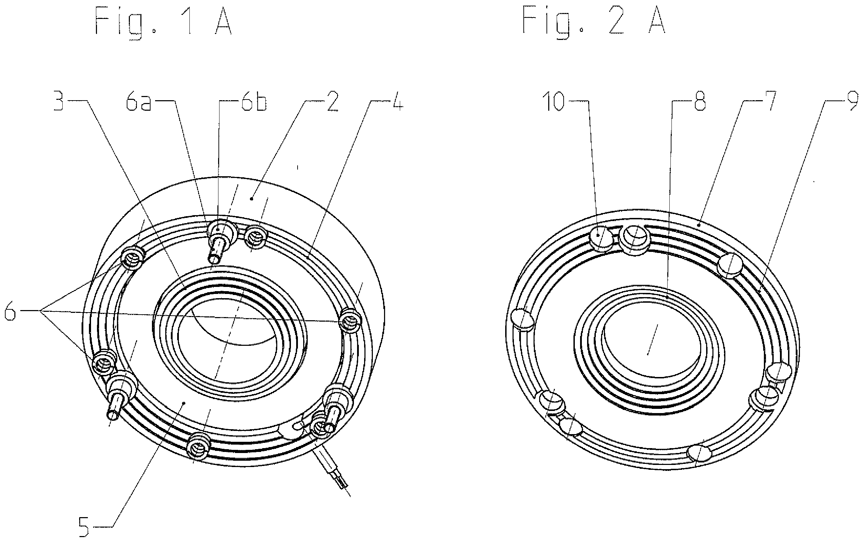

Fig. 1a zeigt den Spulenträger 2 einer elektromagnetischen Federdruckbremse 1 mit Innenpol 3 und Außenpol 4, mit einer Magnetspule 5 und mit auf dem Spulenträger 2 verteilten Druckfedern 6, wobei die Oberflächen des Innenpols 3 und Außenpols 4 in einer bevorzugten Ausführungsform in Stufen ausgeführt sind.

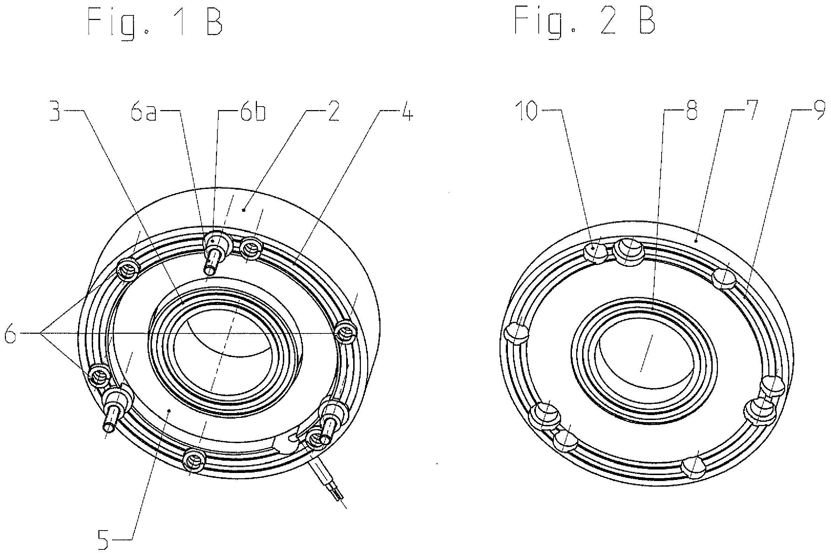

Fig. 1b zeigt den Spulenträger 2 einer elektromagnetischen Federdruckbremse 1 mit Innenpol 3 und Außenpol 4, mit einer Magnetspule 5 und auf dem Spulenträger 2 verteilten Druckfedern 6, wobei die Oberflächen des Innenpols 3 und Außenpols 4 in einer weiteren bevorzugten Ausführungsform die Form von konzentrisch zur Mittelachse der Federdruckbremse 1 kreisförmig verlaufenden Rillen und Vorsprüngen aufweisen.

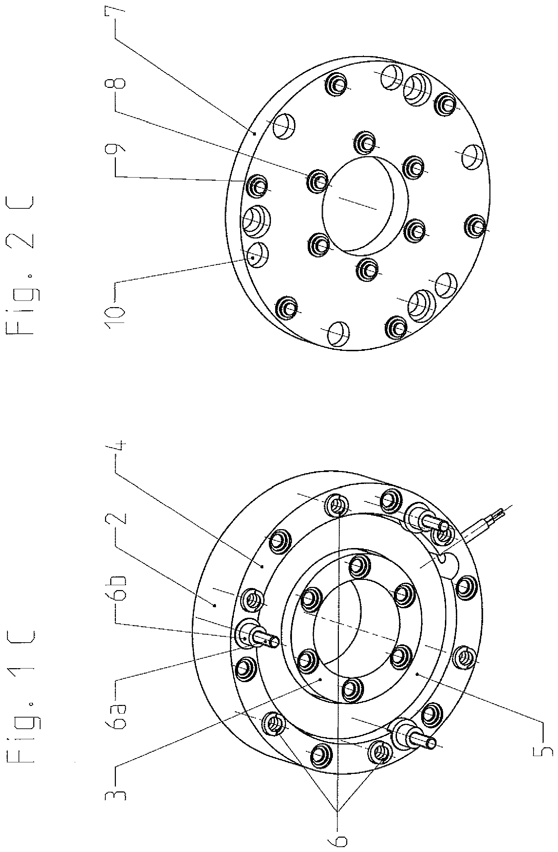

Fig. 1c zeigt den Spulenträger 2 einer elektromagnetischen Federdruckbremse 1 mit Innenpol 3 und Außenpol 4, mit einer Magnetspule 5 und auf dem Spulenträger 2 verteilten Druckfedern 6, wobei die Oberflächen des Innenpols 3 und Außenpols 4 in noch einer weiteren bevorzugten Ausführungsform in Form von Stufenbohrungen ausgeführt sind, die auf einem konzentrisch zur Mittelachse liegenden Teilkreis angeordnet sind.
Fig. 2a zeigt die Ankerscheibe 7 einer elektromagnetischen Federdruckbremse 1 mit einem Innenpol 8, einem Außenpol 9 und optional Halterungen 10 für die Druckfedern 6, wobei die Oberflächen des Innenpols 3 und Außenpols 4 in einer bevorzugten Ausführungsform komplementär passend zum Spulenträger 2 in Fig. 1a als Stufen ausgeführt sind.
Fig. 2b zeigt die Ankerscheibe 7 einer elektromagnetischen Federdruckbremse 1 mit einem Innenpol 8, einem Außenpol 9 und optional Halterungen 10 für die Druckfedern 6, wobei die Oberflächen des Innenpols 3 und Außenpols 4 in einer weiteren bevorzugten Ausführungsform komplementär passend zum Spulenträger in Fig. 1b ausgeführt sind.
Fig. 2c zeigt die Ankerscheibe 7 einer elektromagnetischen Federdruckbremse 1 mit einem Innenpol 8, einem Außenpol 9 und optional Halterungen 10 für die Druckfedern 6, wobei die Oberflächen des Innenpols 3 und Außenpols 4 in einer noch weiteren bevorzugten Ausführungsform komplementär passend zum Spulenträger in Fig. 1c ausgeführt sind.

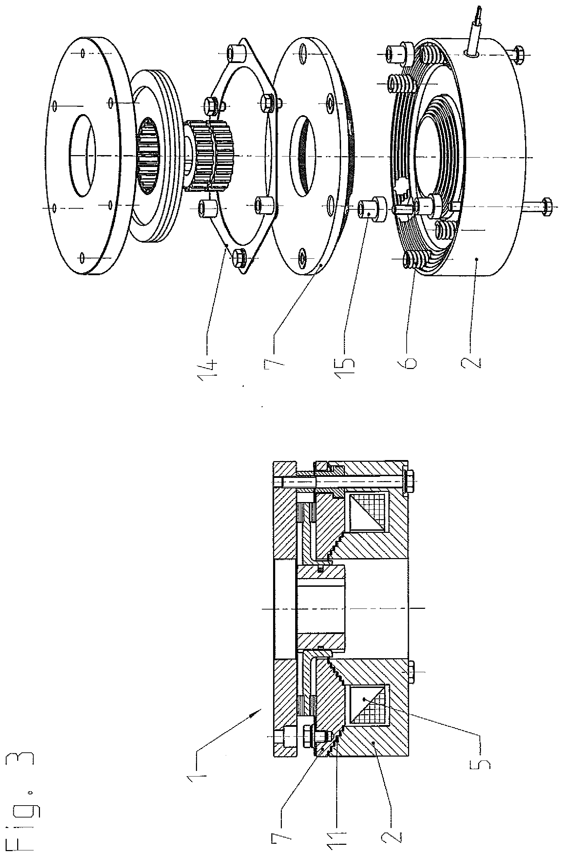

Fig. 3 zeigt eine bevorzugte Ausführungsform der montierten Federdruckbremse 1 mit Spulenträger 2 und Ankerscheibe 7, mit einem Luftspalt 11 zwischen Spulenträger 2 und Ankerscheibe 7. Daneben ist eine Explosionsdarstellung der Federdruckbremse mit einer Federlamelle als Vorrichtung zur radialen Führung 14 der Ankerscheibe 7 und einem Abstandshalter 15 dargestellt.

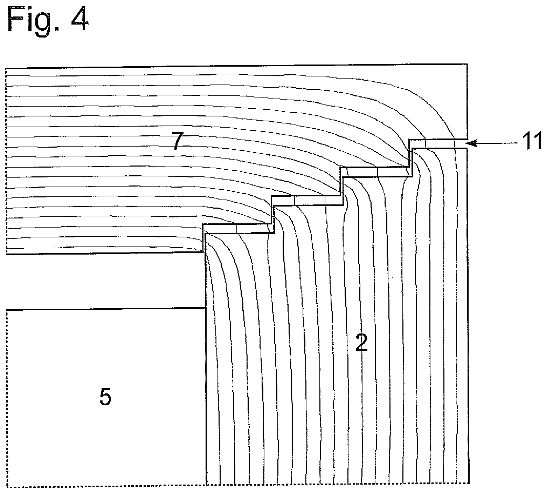

Fig. 4 zeigt bei der bevorzugten Ausführungsform einer stufenförmigen Ausbildung der Poloberflächen von Spulenträger 2 und Ankerscheibe 7 der Federdruckbremse 1 bei angeregter Magnetspule 5 den radialen und axialen Feldlinienverlauf bei einer teilweisen geöffneten Position der Ankerscheibe 7 in der Federdruckbremse 1.

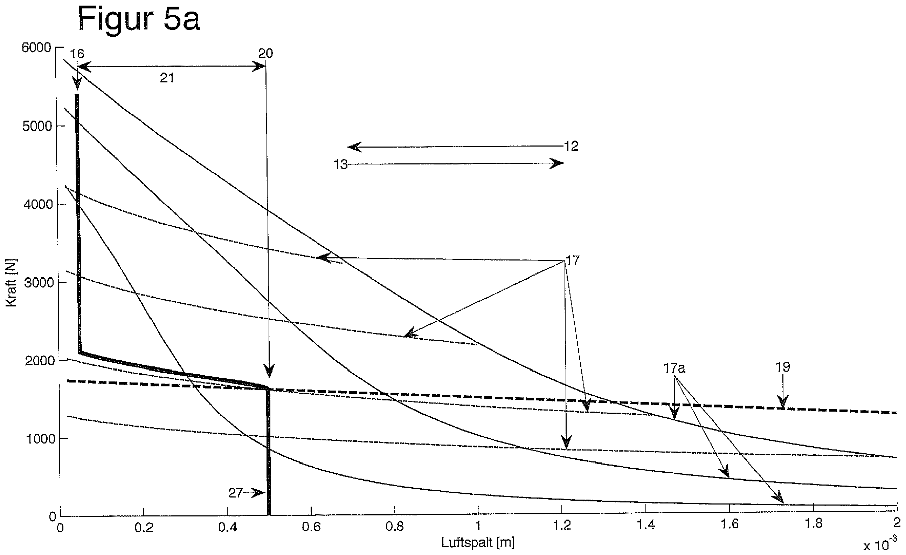

Fig. 5a zeigt für eine konventionelle Federdruckbremse mit planaren Poloberflächen auf dem Spulenträger 2 und der Ankerscheibe 7 den Verlauf der Magnetkraft-Luftspalt-Kennlinien bei konstantem verkettetem magnetischem Fluss 17 sowie bei konstantem Strom 17a für ein Luftspaltintervall einer konventionellen Federdruckbremse, Neben der Federkraft-Luftspalt-Kennlinie 19 ist die Bewegungstrajektorie 27 für die Bestromung (Anregung der Magnetspule) einer konventionellen Federdruckbremse mit Nennspannung zu sehen.

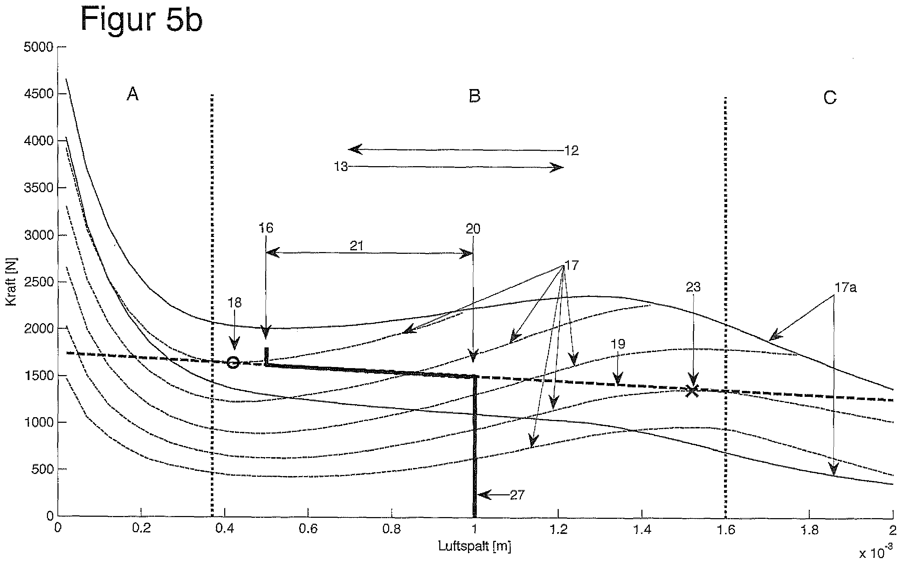

Fig. 5b zeigt für eine bevorzugte Ausführungsform der Federdruckbremse 1 mit gestuften Poloberflächen auf dem Spulenträger 2 und der Ankerscheibe 7 den Verlauf der Magnetkraft-Luftspalt-Kennlinien bei konstantem verkettetem magnetischem Fluss 17 sowie bei konstantem Strom 17a für ein Luftspaltintervall einer Federdruckbremse 1 mit steuerbarer Ankerscheibenbewegung. Neben der Federkraft-Luftspalt-Kennlinie 19 ist die Bewegungstrajektorie 27 für die Bestromung der Federdruckbremse 1 zu sehen, die nach dem erfindungsgemäßen Verfahren arbeitet.

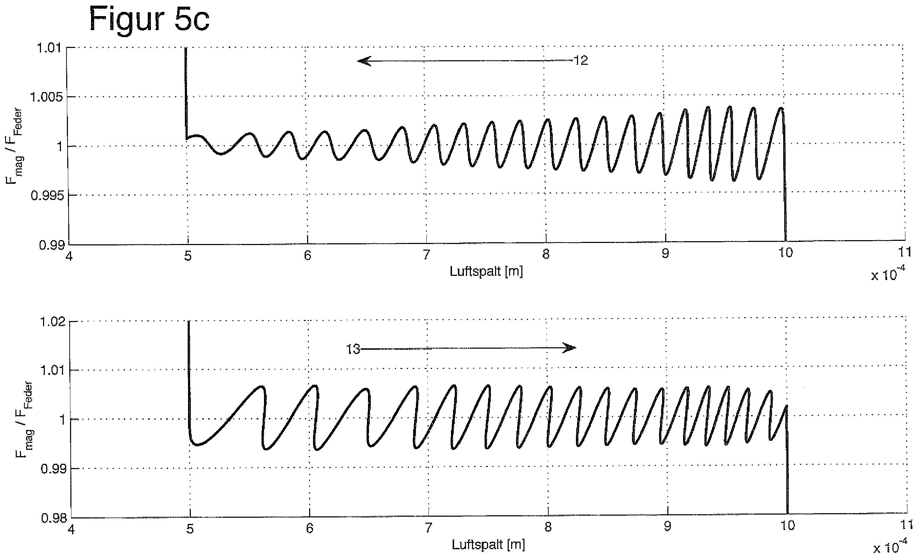

Fig. 5c zeigt die Variation des Verhältnisses von Magnetkraft der Magnetspule 5 zur Federkraft über einen Luftspaltintervall für eine Bewegung der Ankerscheibe 7 in Öffnungsrichtung 12 und für eine Bewegung der Ankerscheibe 7 in Schließrichtung 13, jeweils im Bereich B (Gegenkopplung), die als eine Aneinanderreihung von Abbrems- und Beschleunigungszyklen anzusehen sind.

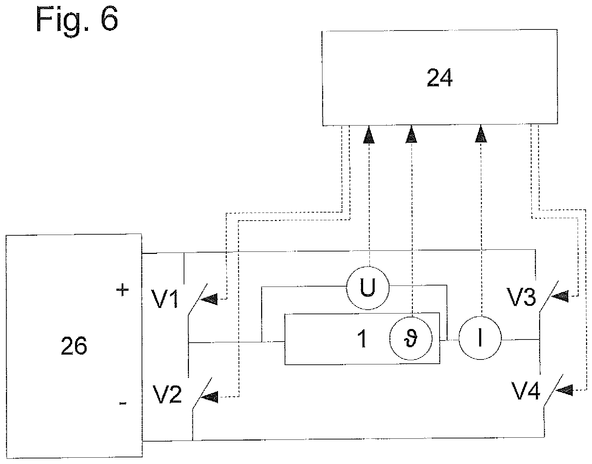

Fig. 6 zeigt eine Möglichkeit zum Betrieb einer Federdruckbremse 1 unter Verwendung einer Vollbrücke mit Ventilen V1, V2, V3, V4, einer elektronischen Ansteuereinheit 24 (z,B. Mikrocontroller) und einer Spannungsversorgung 26.

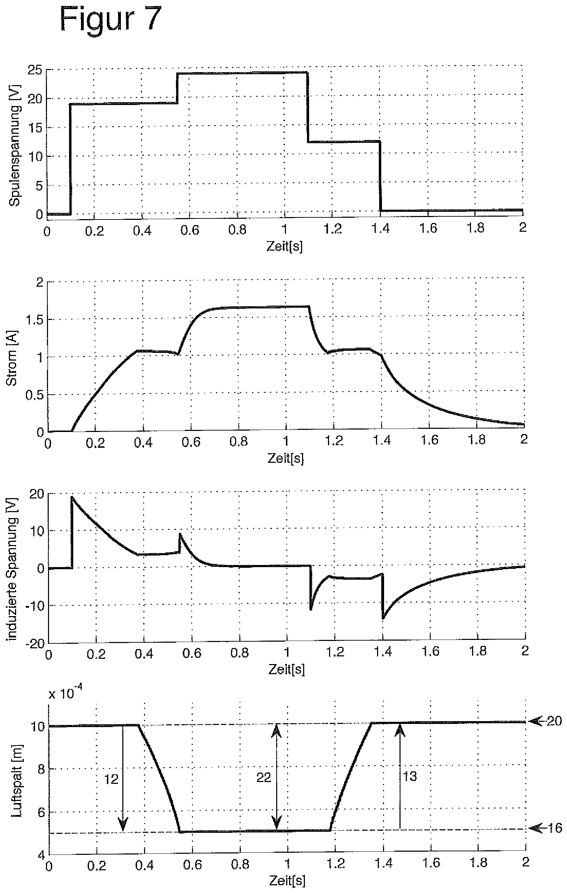

Fig. 7 zeigt eine mögliche Betriebsart der elektromagnetischen Federdruckbremse 1, wobei die Variation der Anregung der Magnetspule 5 mittels einer Spannungszwischenstufe erfolgt. Des Weiteren sind der zugehörige Stromfluss, die in der Magnetspule 5 induzierte Spannung und die Variation des Luftspalts (11) beim Öffnen und Schließen der Bremse für diese Betriebsart aufgetragen.

### Ausführliche Beschreibung

Wie in Fig. 1a gezeigt, ist ein Bestandteil einer elektromagnetisch gelüfteten Federdruckbremse 1 ein Spulenträger 2. Der Spulenträger 2 besteht aus einem Innenpol 3, daran bevorzugt radial auswärts anschließend eine Vertiefung (Spulenraum), in welcher sich eine Magnetspule 5 befindet, und bevorzugt radial auswärts daran anschließend einem Außenpol 4. Des Weiteren sind auf dem Spulenträger 2 mehrere Druckfedern 6 als kraftausübendes Element verteilt sowie Einrichtungen zur Befestigung von weiteren Bestandteilen 6a der Bremse und Distanz- und Führungselemente 6b vorgesehen. Die Oberflächen des Innenpols 3 und des Außenpols 4 des Spulenträgers 2 weisen Oberflächen mit variierendem Gradienten auf. Der Spulenträger 2 kann bevorzugt radial anschließend an den Außenpol 4 einen umlaufenden verdickten Rand aufweisen.

Fig. 2a zeigt eine Ankerscheibe 7 als einen weiteren Bestandteil einer Federdruckbremse 1. Die Ankerscheibe 7 besteht aus einem Innenpol 8 und weist eine daran bevorzugt radial auswärts anschließende planare Fläche und einen daran bevorzugt radial auswärts anschließenden Außenpol 9 auf.

Außerdem kann die Ankerscheibe 2 Halterungen 10 für die Druckfedern 6 und Durchführungen für die genannten Befestigungseinrichtungen aufweisen. Die Oberflächen des Innenpols 8 und des Außenpols 9 der Ankerscheibe 7 weisen Oberflächen mit variierendem Gradienten auf, wobei diese bevorzugt komplementär zu den Gradienten der Oberflächen des Innenpols 3 und Außenpols 4 des Spulenträgers 2 passen.

In einer bevorzugten Ausführungsform bilden die variierenden Gradienten auf der Oberfläche des Innenpols 3 und des Außenpols 4 des Spulenträgers 2 eine oder mehrere Stufen aus, wobei die Kante der Stufe bzw. die Kanten der Stufen parallel zur Bewegungsrichtung der Ankerscheibe 7 ausgebildet sind. Die Stufen können sowohl im Innenpol 3 als auch im Außenpol 4 auf- oder absteigend ausgeformt sein, jedoch bevorzugt passend zueinander. In einer alternativen Ausführungsform weisen die Kante(n) der Stufe(n) des Spulenträgers 2 eine zur Bewegungsrichtung der Ankerscheibe 7 angewinkelte Form auf. Die Ankerscheibe 7 weist hierbei für die bevorzugte wie für die alternative Ausführungsform im Bereich des Innenpols 8 und Außenpols 9 eine zum Spulenträger 2 bevorzugt komplementär passende Stufenform aus.

In einer weiteren bevorzugten Ausführungsform bilden die variierenden Gradienten auf der Oberfläche des Innenpols 3, 8 und des Außenpols 4, 9 des Spulenträgers 2 bzw. der Ankerscheibe 7 einen oder mehrere Einstiche bzw. Vorsprünge aus. Die zum Spulenträger 2 gehörende Ankerscheibe 7 ist hierbei bevorzugt komplementär passend ausgebildet. In einer alternativen Ausführungsform sind der eine oder die mehreren Einstiche bzw. Vorsprünge auf dem jeweiligen Innenpol 3, 8 und Außenpol 4, 9 des Spulenträgers 2 oder der Ankerscheibe 7 konzentrisch verteilt.

In einer weiteren alternativen Ausführungsform können die Oberflächen auf den jeweiligen Innenpolen 3, 8 und Außenpolen 4, 9 der Ankerscheibe 7 und des Spulenträgers 2 stufenförmig mit Einstichen bzw. Vorsprüngen ausgebildet sein, wobei diese jeweils bevorzugt komplementär passend kombinierbar sind. Daneben können die variierenden Gradienten auf der Oberfläche des Spulenträgers 2 und der Ankerscheibe 7 die Form von konzentrisch zur Mittelachse der Federdruckbremse verlaufenden Kreisen aufweisen, wie in Fig. 1b und 2b gezeigt.

In einer weiteren Ausführungsform können die variierenden Gradienten auf den Poloberflächen des Spulenträgers 2 und der Ankerscheibe 7 in Form von Stufenbohrungen auf einem konzentrisch zur Mittelachse der Federdruckbremse liegenden Teilkreis angeordnet sein, wie in Fig. 1c und 2c dargestellt.

In noch einer weiteren Ausführungsform sind die variierenden Gradienten auf den Poloberflächen des Spulenträgers 2 und der Ankerscheibe 7 so angeordnet, dass die Kontur der Oberflächen einer beliebigen Geometrie zwischen dem Spulenraum und der Außenkontur des Spulenträgers folgt. Hierbei kann die Kontur der Oberflächen im Wesentlichen parallel zu der Innenkontur oder der Außenkontur des Spulenträgers und/oder der Ankerscheibe folgen. Daneben kann die Kontur der Oberflächen im Wesentlichen parallel zu der Kontur des Spulenraums des Spulenträgers 2 folgen.

Alternativ kann die elektromagnetisch gelüftete Bremse auch als Permanentmagnetbremse ausgeführt sein, wobei hier das kraftausübende Element auf den Spulenträger 2 mindestens ein Permanentmagnet, und die zweite Kraft die Federkraft der Rückstellfeder ist. Hierbei wird die Permanentmagnetbremse durch Anregen der Magnetspule geöffnet, sodass das Magnetfeld des Permanentmagneten im Wesentlichen aufgehoben wird. Die Ankerscheibe kann dann mittels einer Rückstellfeder beispielsweise einer Blattfeder vom Spulenträger weg bewegt werden. Durch Verringern der Anregung der Magnetspule wird das resultierende Magnetfeld aus Permanentmagnet und Magnetspule wieder stärker und die Ankerscheibe wird entgegen der Rückstellfeder in die geschlossene Position bewegt.

Fig. 3 zeigt in zusammengesetzter Darstellung und in Explosionsdarstellung eine bevorzugte Ausführungsform einer montierten Federdruckbremse 1 mit Spulenträger 2 und Ankerscheibe 7 mit jeweils stufenförmigen Oberflächen. Außerdem ist ein Luftspalt 11 zu erkennen, der als mittlerer Abstand zwischen den Oberflächen der Innenpole 3, 8 und Außenpole 4, 9 von Spulenträger 2 und Ankerscheibe 7 definiert ist. Hierbei zählen die Oberflächen der Bohrungen auf den Poloberflächen der Ankerscheibe und des Spulenträgers für Federn, Haltebuchsen, bevorzugt nicht zu den Poloberflächen. Der Hub 22, also die Luftspaltdifferenz zwischen angezogener (geschlossener Position) und abgefallener Position (geöffneter Position) der Ankerscheibe 7, liegt bei Federdruckbremsen 1 der hier in Rede stehenden Art bevorzugt in einem Bereich von 0.1 mm - 2.5 mm. Das Verhältnis aus der Höhe der Ausformungen auf den Oberflächen (Fig. 3: die Stufenhöhe) der Innenpole 3, 8 und der Außenpole 4, 9 aufgrund der variierenden Gradienten zum Hub 22 liegt für die hier in Rede stehenden Federdruckbremsen 1 bevorzugt im Bereich zwischen 1 zu 1 und 4 zu 1. In der in Fig. 3 gezeigten bevorzugten Ausführungsform bilden die Stufenhöhe und der Hub 22 ein Verhältnis von 3 zu 1.

Bei Bewegung der Ankerscheibe 7 in Öffnungsrichtung 12 wird der Luftspalt 11 kleiner und die Druckfedern 6 werden gestaucht. Bei Bewegung der Ankerscheibe 7 in Schließrichtung 13 wird der Luftspalt 11 größer und die Druckfedern 6 werden entlastet. Des Weiteren ist eine Vorrichtung zur radialen Führung 14 der Ankerscheibe 7 vorgesehen.

Außerdem ist mindestens ein Abstandshalter 15 dargestellt, der bzw. die zwischen Spulenträger 2 und Ankerscheibe 7 angeordnet sein können. Hierbei ist der Grundluftspalt 16 der Luftspalt 11, wenn sich eine Ankerscheibe 7 in geöffneter Position befindet. Ist die Ankerscheibe 7 in geschlossener Position, so wird dieser Luftspalt 11 als Nennluftspalt 20 bezeichnet. Das Luftspaltintervall zwischen geöffneter (Grundluftspalt 16) und geschlossener Position (Nennluftspalt 20) der Ankerscheibe 7 legt den Hubbereich 21 der Federdruckbremse 1 fest. Mit mindestens einem Abstandshalter 15 wird der Grundluftspalt 16 größer und somit der Hubbereich 21 bzw. der Hub 22 der Ankerscheibe 7 verkleinert. Die Größe des Grundluftspalts 16 liegt bevorzugt in einem Bereich von 0.1 - 1.5 mm.

Fig. 4 zeigt die überlappenden Oberflächen eines stufenförmigen Spulenträgers 2 und einer stufenförmigen Ankerscheibe 7 bei angeregter Magnetspule 5 in einer teilweise geöffneten Position der Ankerscheibe 7, wobei der erzeugte radiale und axiale magnetische Feldlinienverlauf durch die Oberflächen des Spulenträgers 2 und die Ankerscheibe 7 dargestellt ist. Aufgrund des radialen magnetischen Feldlinienverlaufs wirkt auf die Ankerscheibe 7 während der Bewegung im Hubbereich 21 eine radiale Kraft. Zur radialen Führung der Ankerscheibe 7 während der Bewegung der Ankerscheibe 7 im Hubbereich 21 wird in der bevorzugten Ausführungsform die Vorrichtung zur radialen Führung 14 der Ankerscheibe 7 mittels einer (spielfreien) Feder-Lamelle realisiert. In einer weiteren Ausführungsform ist die Vorrichtung zur radialen Führung 14 durch mindestens eine Führungsbuchse ausgeführt. In einer weiteren Ausführungsform erfolgt die radiale Führung mittels seitlich an der Ankerscheibe 7 angreifender Zylinderstifte, oder durch Gewindestifte mit auf die Ankerscheibe wirkenden Kugeln, oder mit Kugeln zwischen Spulenträger und Ankerscheibe.

Fig. 5a zeigt für eine konventionelle Federdruckbremse mit planaren Oberflächen auf dem Spulenträger und der Ankerscheibe im Bereich der Innenpole und Außenpole die für ein Luftspaltintervall in Schließrichtung 13 stetig abfallenden Magnetkraft-Luftspalt-Kennlinien bei konstantem verkettetem magnetischem Fluss 17. Daneben sind auch Magnetkraft-Luftspalt-Kennlinien bei konstantem Strom 17a gezeigt. Des Weiteren ist die Federkraft-Luftspalt-Kennlinie 19 dargestellt. Im Hubbereich 21 der konventionellen Federdruckbremse bewegt sich die Ankerscheibe bei ausreichender Erhöhung/Verringerung der Anregung bzw. konstanter Anregung der Magnetspule stets im Bereich einer Mitkopplung zwischen Federkraft und Magnetkraft, sodass die Ankerscheibe bei ihrer Bewegung zur geschlossenen Position (Nennluftspalt 20) bzw. geöffneten Position (Grundluftspalt 16) jeweils während der Bewegung im gesamten Hubbereich 21 zunehmend beschleunigt wird.

In Fig. 5b sind die Magnetkraft-Luftspalt-Kennlinien bei konstantem Strom 17a sowie bei konstantem verkettetem magnetischem Fluss 17 für die in Figur 3 dargestellte bevorzugte Ausführungsform dargestellt. Letztere weisen aufgrund der überlappenden Oberflächen des Spulenträgers 2 und der Ankerscheibe 7 im Vergleich zu konventionellen Federdruckbremsen eine deformierte Magnetkraftverteilung auf. Die Magnetkraft-Luftspalt-Kennlinien bei konstantem verkettetem magnetischem Fluss 17 bilden bei einem Luftspalt 11 nahe Null ein Maximum aus und weisen dann mit größer werdendem Luftspalt 11 der Ankerscheibe 7 eine negative Steigung in Schließrichtung 13 auf, um bei größer werdendem Luftspalt 11 ein lokales Minimum 18 auszubilden und danach eine positive Steigung in Schließrichtung 13 mit größer werdendem Luftspalt 11 aufzuweisen, Im weiteren Verlauf bildet die Magnetkraft-Luftspalt-Kennlinie bei konstantem verkettetem magnetischem Fluss 17 mit ansteigendem Luftspalt 11 ein lokales Maximum 23 aus und weist danach eine negative Steigung in Schließrichtung 13 auf.

Der Verlauf der Magnetkraft-Luftspalt-Kennlinien mit konstantem verkettetem magnetischem Fluss 17 ist über die Ausformung der Oberfläche der Innenpole 3, 8 und Außenpole 4, 9 des Spulenträgers 2 bzw. der Ankerscheibe 7 variierbar. Beispielsweise führt eine größere Anzahl von Stufen als in der in Figur 3 gezeigten Ausführungsform zu einem steileren Verlauf der Magnetkraft-Luftspalt-Kennlinien bei konstantem verkettetem magnetischem Fluss 17 im Bereich der Gegenkopplung.

Für die Bewegung der Ankerscheibe 7 im Hubbereich 21 bilden sich drei Bereiche A, B und C aus. Im Bereich A, im Wesentlichen zwischen Null-Luftspalt und dem lokalem Minimum 18, bildet sich ein Bereich der Mitkopplung zwischen Magnetkraft und Federkraft bei der Bewegung der Ankerscheibe 7 aus. Die Mitkopplung führt zu einer ansteigenden Beschleunigung bei kleiner oder größer werdendem Luftspalt 11 in Bewegungsrichtung. Im Bereich B, im Wesentlichen zwischen lokalem Minimum 18 und lokalem Maximum 23, bildet sich für die Bewegung der Ankerscheibe 7 ein Bereich der Gegenkopplung zwischen Magnetkraft und Federkraft aus. Die Gegenkopplung führt zu einer abnehmenden Beschleunigung bei kleiner oder größer werdendem Luftspalt 11 in Bewegungsrichtung. Im Bereich C, im Wesentlichen ab dem lokalen Maximum 23, bewegt sich die Ankerscheibe 7 im Bereich der Mitkopplung zwischen Federkraft und Magnetkraft. Hierbei ist die Bewegung einer Ankerscheibe in den Bereichen der Mitkopplung (A, C) mit der Situation in einer konventionellen Federdruckbremse vergleichbar.

Hierbei ist der Übergang zwischen dem Bereich A (Mitkopplung) und dem Bereich B (Gegenkopplung) dadurch gegeben, dass die Steigung der Magnetkraft-Luftspalt-Kennlinie bei konstantem verkettetem magnetischem Fluss 17 in Schließrichtung 13 größer ist als die Steigung der Federkraft-Luftspalt-Kennlinie 19 in Schließrichtung 13. Entsprechendes gilt für den Übergang zwischen dem Bereich B (Gegenkopplung) und dem Bereich C (Mitkopplung). Die Übergänge zwischen den einzelnen Bereichen liegen somit nicht exakt bei den lokalen Extremwerten 18, 23 der Magnetkraft-Luftspalt-Kennlinie bei konstantem verkettetem magnetischem Fluss 17, sondern in Abhängigkeit von der Steigung der Federkraft-Luftspalt-Kennlinie 19 etwas dazu versetzt.

Unter Beifügung mindestens eines Abstandhalters 15 kann der Hubbereich 21 in der Federdruckbremse 1 zwischen Spulenträger 2 und Ankerscheibe 7 auf ein kleineres Luftspaltintervall eingeschränkt werden, sodass die Magnetkraft-Luftspalt-Kennlinien bei konstantem verkettetem magnetischem Fluss 17 im Bereich ab dem Abstandshalter 15 eine größere Steigung in Schließrichtung 13 der Bremse aufweisen als die Federkraft-Luftspalt-Kennlinie 19. Außerdem kann der Nennluftspalt 20 (geschlossene Position) so bemessen sein, dass auch dieser im Bereich B (Gegenkopplung) liegt, sodass der gesamte Hubbereich 21 im Bereich B liegt.

In einer Ausführungsform wird der mindestens eine Abstandshalter 15 als Platte aus zumindest zum Teil nicht magnetisierbarem Material ausgeführt und ist auf der Oberfläche des Spulenträgers 2 und/oder der Ankerscheibe 7 angebracht. In einer weiteren Ausführungsform ist der Abstandshalter 15 eine auf den Distanz- oder Führungselementen der Ankerscheibe 7 angeordnete Scheibe aus zumindest zum Teil nicht magnetisierbarem Material. In einer weiteren Ausführungsform sind die Distanz- oder Führungselemente 6b als Abstandshalter 15 vorgesehen, wobei Teile des bzw. der Abstandshalter 15 aus zumindest zum Teil nicht magnetisierbarem Material bestehen.

In einer weiteren Ausführungsform besteht zumindest ein Teil des Abstandshalters 15 aus einem Polymer bzw. Elastomer und dient somit zur zusätzlichen Geräuschdämpfung beim Aufprall der Ankerscheibe 7 auf dem Abstandshalter 15. Damit kann eine höhere Aufprallgeschwindigkeit bei gleichbleibender Geräuschentwicklung erreicht werden, was zu einer Verkürzung der Schaltzeit führt.

Nachfolgend wird anhand der Fig. 5b die steuerbare Bewegung der Ankerscheibe 7 aufgrund der deformierten Magnetkraftverteilung in der Federdruckbremse 1 beschrieben. Beim Öffnen der Federdruckbremse 1 wird die im Spulenträger 2 befindliche Magnetspule 5 mittels einer angelegten Spannung oder eines fließenden Stroms angeregt. Aufgrund der Anregung der Magnetspule wird eine induzierte Spannung erzeugt, wobei die induzierte Spannung der Änderung des verketteten magnetischen Flusses entspricht. Somit wird eine auf die Ankerscheibe 7 in Öffnungsrichtung 12 wirkende Magnetkraft erzeugt. Die angelegte Spannung bzw. der angelegte Strom werden weiter erhöht, bis die auf die Ankerscheibe 7 wirkende Magnetkraft größer ist als die auf die Ankerscheibe 7 wirkende Federkraft. Das Verhältnis aus Magnetkraft und Federkraft, welches an der Ankerscheibe 7 angreift, wird größer als eins, so dass auf die Ankerscheibe 7 eine beschleunigende Kraft wirkt und die Ankerscheibe 7 sich von der geschlossenen Position (Nennluftspalt 20) in Öffnungsrichtung 12 bewegt. Da der verkettete magnetische Fluss eine Zustandsgröße des elektromagnetischen Teilsystems der Federdruckbremse 1 ist und somit der Wert des magnetischen Flusses sich für kurze Zeitintervalle nicht Sprunghaft ändert, folgt die Bewegungstrajektorie 27 der Federdruckbremse 1 für schnelle Bewegungen der Ankerscheibe zunächst immer im wesentlichem der Magnetkraft-Luftspalt-Kennlinien bei konstantem verkettetem magnetischem Fluss 17.

Startet die Bewegung bei einem Nennluftspalt 20 im Bereich C (Mitkopplung), wo die Steigung der Magnetkraft-Luftspalt-Kennlinie bei konstantem verkettetem magnetischem Fluss 17 kleiner oder gleich ist wie die Steigung der Federkraft-Luftspalt-Kennlinie 19, so wird die Ankerscheibe 7 zu Beginn ihrer Bewegung zunehmend beschleunigt. Dies gilt bis zum Übergang vom Bereich C (Mitkopplung) in den Bereich B (Gegenkopplung), wo die Steigung der Magnetkraft-Luftspalt-Kennlinie bei konstantem verkettetem magnetischem Fluss 17 größer ist als die Steigung der Federkraft-Luftspalt-Kennlinie 19.

Während der Bewegung der Ankerscheibe 7 im Bereich B (Gegenkopplung), bzw. wenn die Bewegung der Ankerscheibe 7 bei einem Nennluftspalt 20 im Bereich B (Gegenkopplung) startet, erfährt die Ankerscheibe 7 bei dann konstant bleibendem bzw. sich wenig ändernden verkettetem magnetischem Fluss im Verlauf der Bewegung eine abnehmende beschleunigende Kraft, bis hin zu einer Rückstellkraft entgegen der ursprünglichen Bewegung in Öffnungsrichtung 12. Diese Rückstellkraft kann wegen der in Öffnungsrichtung 12 im Wesentlichen abfallenden Magnetkraft-Luftspalt-Kennlinien bei konstantem magnetischem verkettetem Fluss 17 bis zum Übergang vom Bereich B (Gegenkopplung) zum Bereich A (Mitkopplung) in Verbindung mit der größer werdenden Federkraft (aufgrund der Stauchung der Feder) auftreten, Die Ankerscheibe 7 wird dadurch in ihrer Bewegung gebremst. Dies entspricht einem Verhältnis aus Magnetkraft und Federkraft von kleiner als eins, das an der Ankerscheibe 7 angreift. Hierdurch entsteht während der Bewegung der Ankerscheibe 7 im Bereich B eine Gegenkopplung zwischen der Magnetkraft der Magnetspule 5 und der Federkraft der Druckfeder 6. Die Position bzw. die Bewegung/Geschwindigkeit der Ankerscheibe 7 im Hubbereich 21 wird mittels der Variation der Magnetkraft über den verketteten magnetischen Fluss steuerbar.

Bei weiterer Erhöhung des verketteten magnetischen Flusses (mittels Variation der Anregung der Magnetspule 5 durch Erzeugung einer angepassten induzierten Spannung) setzt die Ankerscheibe 7 die Bewegung in Öffnungsrichtung 12 fort. Dies geschieht, weil die Magnetkraft durch die Erhöhung des verketteten magnetischen Flusses stärker zunimmt als die gleichzeitig größer werdende Federkraft. Die Ankerscheibe 7 bewegt sich dann auf Magnetkraft-Luftspalt-Kennlinien bei konstantem verkettetem magnetischem Fluss 17, die zunächst oberhalb der Federkraft-Luftspalt-Kennlinie 19 liegen. Die Bewegung der Ankerscheibe 7 wird aufgrund eines Verhältnises aus Magnetkraft und Federkraft von größer eins beschleunigt fortgesetzt. Die Magnetkraft nimmt aufgrund der Bewegung auf den Magnetkraft-Luftspalt-Kennlinien bei konstantem verkettetem magnetischem Fluss 17 wieder ab, und das Verhältnis aus Magnetkraft zu Federkraft wird wieder kleiner eins und die Bewegung der Ankerscheibe 7 abgebremst.

Bei erneuter Erhöhung des verketteten magnetischen Flusses (mittels Variation der Anregung der Magnetspule durch Erzeugung einer angepassten induzierten Spannung) setzt die Ankerscheibe 7 die Bewegung in Öffnungsrichtung 12 wieder beschleunigt fort.

Auf diese Weise bewegt sich die Ankerscheibe 7, wie in Fig. 5c für die Bewegung in Öffnungsrichtung 12 gezeigt, über mindestens einen Beschleunigungs- und Abbremszyklus, durch eine angepasste Erhöhung des magnetischen Flusses über typischerweise mehrere Beschleunigungs- und Abbremszyklen im Bereich B (Gegenkopplung) in Öffnungsrichtung 12, wobei das Verhältnis von Magnetkraft und Federkraft zwischen größer eins und kleiner eins variiert. Hierbei kann die Bewegung der Ankerscheibe im Bereich B (Gegenkopplung) als Aneinanderreihung von Beschleunigungs- und Abbremszyklen aufgrund ihrer Dynamik als eine kontinuierliche Bewegung der Ankerscheibe 7 angesehen werden.

In einer Ausführungsform der Erfindung wird die Bewegung der Ankerscheibe 7 nach Übergang in den Bereich A (Mitkopplung) fortgesetzt. Die Ankerscheibe 7 wird hier aufgrund der steil ansteigenden Magnetkraft-Luftspalt-Kennlinien 17 nochmals beschleunigt. Das Verhältnis aus Magnetkraft und Federkraft wird im Bereich A (Mitkopplung) wieder dauerhaft größer als eins und die Ankerscheibe wird bis zum Erreichen der geöffneten Position (Grundluftspalt 16) zunehmend beschleunigt.

In einer bevorzugten Ausführungsform findet die Bewegung der Ankerscheibe 7 in Öffnungsrichtung 12 aufgrund von mindestens einem Abstandshalter 15 im Bereich B (Gegenkopplung) statt. Die Ankerscheibe 7 wird über mindestens einen Beschleunigungs- und Abbremszyklus bewegt und erreicht dann die geöffnete Position (Grundluftspalt 16) mit einstellbarer Geschwindigkeit bzw. in einstellbarer Zeit.

Nach Erreichen der geöffneten Position wird die Magnetkraft durch weitere Anregung der Magnetspule 5 mittels Erhöhung der angelegten Spannung oder des angelegten Stroms weiter erhöht, so dass das Verhältnis aus Magnetkraft zu Federkraft nach Erreichen der geöffneten Position größer eins wird und die Ankerscheibe 7 fest in Richtung Spulenträger 2 gedrückt wird und eine Magnetkraftreserve in der geöffneten Position der Ankerscheibe 7 in der Federdruckbremse 1 aufgebaut wird.

Beim Schließen der Federdruckbremse 1 wird die Magnetspule 5 mittels Verringerung der anliegenden Spannung bzw. des anliegenden Stroms weniger angeregt, sodass die auf die Ankerscheibe 7 wirkende Magnetkraft abnimmt. Die Anregung der Magnetspule 5 wird soweit verringert, bis das Verhältnis aus Magnetkraft und Federkraft, welches auf die Ankerscheibe 7 wirkt, kleiner als eins ist, und die Ankerscheibe 7 wird in Schließrichtung 13 beschleunigt.

Im Fall einer Ausführungsform der Federdruckbremse 1 ohne Abstandshalter 15 startet die Bewegung der Ankerscheibe 7 bei einer geöffneten Position (Grundluftspalt 16) im Bereich A (Mitkopplung) und wird aufgrund der in Bewegungsrichtung (Schließrichtung 13) abfallenden Magnetkraft-Luftspalt-Kennlinien bei konstantem magnetischem verkettetem Fluss 17 bis zum Übergang von Bereich A (Mitkopplung) zum Bereich B (Gegenkopplung) zunehmend beschleunigt.

Im Fall der bevorzugten Ausführungsform der Federdruckbremse 1 mit auf den Bereich B (Gegenkopplung) durch Abstandshalter 15 eingeschränkten Hubbereich 21, wo die Steigung der Magnetkraft-Luftspalt-Kennlinie bei konstantem verkettetem magnetischem Fluss 17 größer ist als die Steigung der Federkraft-Luftspalt-Kennlinie 19, erfährt die Ankerscheibe 7 bei konstant bleibendem bzw. sich wenig ändernden verketteten magnetischen Fluss aufgrund der in Schließrichtung 13 ansteigenden Magnetkraft-Luftspalt-Kennlinien bei konstantem verkettetem magnetischem Fluss 17 eine abnehmende beschleunigende Kraft, bis hin zu einer Rückstellkraft entgegen der Schließrichtung 13. Dies entspricht einem Verhältnis von Magnetkraft zu Federkraft von größer als eins. Somit besteht wiederum während der Bewegung der Ankerscheibe 7 eine Gegenkopplung zwischen der Magnetkraft der Magnetspule 5 und der Federkraft der Druckfedern 6. Dies ist auch für die Ausführungsform ohne Abstandshalter 15 der Fall, wobei hier die Gegenkopplung erst nach dem Übergang von Bereich A (Mitkopplung) zum Bereich B (Gegenkopplung) einsetzt. Die Position bzw. die Bewegung oder Geschwindigkeit der Ankerscheibe 7 im Hubbereich 21 wird mittels der Variation der Magnetkraft über den verketteten magnetischen Fluss steuerbar.

Bei weiterer Verringerung des verketteten magnetischen Flusses (mittels Variation der Anregung der Magnetspule 5 durch Erzeugung einer angepassten induzierten Spannung) setzt die Ankerscheibe 7 die Bewegung in Schließrichtung 13 fort. Dies geschieht, weil die Magnetkraft durch die abnehmende Anregung der Magnetspule 5 stärker abnimmt als die gleichzeitig kleiner werdende Federkraft. Die Ankerscheibe 7 bewegt sich auf Magnetkraft-Luftspalt-Kennlinien bei konstantem verkettetem magnetischem Fluss 17, die unterhalb der Federkraft-Luftspalt-Kennlinie 19 liegen. Die Bewegung der Ankerscheibe 7 wird dann aufgrund des Verhältnisses aus Magnetkraft und Federkraft von kleiner eins beschleunigt fortgesetzt.

Die Magnetkraft nimmt aufgrund der Bewegung in Schließrichtung 13 auf den Magnetkraft-Luftspalt-Kennlinien bei konstantem verketteten magnetischen Fluss 17 wieder zu und das Verhältnis aus Magnetkraft zu Federkraft wird wieder größer als eins und die Bewegung der Ankerscheibe 7 abgebremst.

Bei weiterer Verringerung des verketteten magnetischen Flusses (mittels Variation der Anregung der Magnetspule 5 durch Erzeugung einer angepassten induzierten Spannung) setzt die Ankerscheibe 7 die Bewegung in Schließrichtung 13 wieder beschleunigt fort.

Auf diese Weise bewegt sich die Ankerscheibe 7, wie in Fig. 5c für die Bewegung in Schließrichtung 13 gezeigt, über mindestens einen, durch weitere Verringerung des magnetischen Flusses über typischerweise mehrere, Beschleunigungs- und Abbremszyklen im Bereich B (Gegenkopplung) in Schließrichtung 13, wobei das Verhältnis von Magnetkraft und Federkraft zwischen größer eins und kleiner eins variiert. Hierbei kann die Bewegung der Ankerscheibe 7 im Hubbereich 21 aufgrund ihrer Dynamik als Aneinanderreihung der Beschleunigungs- und Abbremszyklen als eine kontinuierliche Ankerscheibenbewegung angesehen werden.

In einer Ausführungsform der Erfindung befindet sich die geschlossene Position (Nennluftspalt 20) im Bereich C (Mitkopplung). Die Bewegung wird beim Übergang von Bereich B (Gegenkopplung) nach Bereich C (Mitkopplung) fortgesetzt. Das Verhältnis aus Magnetkraft und Federkraft wird kleiner eins und die Ankerscheibe wird bis zum Erreichen des Nennluftspalts 20 nochmals zunehmend beschleunigt.

In einer bevorzugten Ausführungsform findet die Bewegung der Ankerscheibe in Schließrichtung 13 bis zu einem Nennluftspalt 20 im Bereich B (Gegenkopplung) statt.

Die Ankerscheibe 7 wird über mindestens einen Beschleunigungs- und Abbremszyklus bewegt und erreicht dann den Nennluftspalt 20 der Federdruckbremse 1 mit einstellbarer Geschwindigkeit bzw. in einstellbarer Zeit. Im weiteren Verlauf wird die Anregung der Magnetspule 5 durch Verringern der Spannung oder des Stroms weiter gesenkt, bis das Verhältnis aus Magnetkraft und Federkraft nahe null ist, was einer Nullspannung oder ausbleibendem Strom entspricht.

Beim Schließen einer elektromagnetisch gelüfteten Federdruckbremse 1 ergibt sich bei dem hier vorgestellten Verfahren eine weitere Einstellmöglichkeit. Das Verhältnis zwischen Magnetkraft und Federkraft lässt sich durch Variation der Anregung der Magnetspule 5 während der Bewegung der Ankerscheibe 7 im Bereich B (Gegenkopplung) zwischen Magnetkraft und Federkraft einstellbar ändern. In Folge des sich einstellbar ändernden verketteten magnetischen Flusses variiert das Verhältnis aus Magnetkraft zu Federkraft zwischen größer eins, kleiner eins und gleich eins. Die Ankerscheibe 7 kann dann mit einer einstellbaren Kraft beaufschlagt werden. Des Weiteren kann das Verhältnis zwischen Magnetkraft und Federkraft aufgrund von Variationen der Anregung der Magnetspule 5 zwischen kleiner oder gleich eins in der geschlossenen Position der Federdruckbremse 1 variiert werden, so dass eine variable Kraft zur Einstellung eines definierten Drehmoments der Federdruckbremse beaufschlagt wird.

In Fig. 6 wird im Weiteren eine mögliche Art der Ansteuerung zum Betrieb der Federdruckbremse 1 gezeigt. Hierbei kann es sich um eine Vollbrücke mit vier von einer elektronischen Ansteuereinheit 24 (z.B. Mikrocontroller) angesteuerten Ventilen 25 handeln. Je nach Ausführungsform kann das Ventil V3 weggelassen werden bzw. das Ventil V4 durch eine Kurzschlussbrücke ersetzt werden. Mit diesen Ventilen kann die Spannung aus der Spannungsversorgung 26 derart gesteuert werden, dass vielfältige Strom- und /oder Spannungsverläufe in die Bremse eingeprägt werden können. Als eine bevorzugte Alternative kann anstelle der Vollbrücke eine analoge Leistungsendstufe verwendet werden.

Der elektronischen Ansteuereinheit 24 (z.B. Mikrocontroller) stehen über Strom- und Spannungssensoren die an der Bremse anliegende Spannung und der durch die Bremse fließende Strom zur Verfügung. In einer Ausführungsform steht der elektrischen Ansteuereinheit die Spulentemperatur über einen Temperaturfühler □ zur Verfügung, um Temperaturbedingte Widerstandsänderungen erfassen und in der Steuerung auswerten zu können.

In Fig. 7 ist eine Variationsart der Anregung in einer Magnetspule 5 der Federdruckbremse 1 zur Steuerung der Ankerscheibe 7 im Hubbereich 21 gezeigt, daneben sind auch eine gleichzeitige Strommessung, die aus Strom und Spannung berechnete induzierte Spannung und die Variation des Luftspalts 11 während der Anregung der Magnetspule 5 gezeigt. Die Magnetspule 5 wird hierbei mittels eines ersten Spannungssprungs auf eine erste Spannung, beispielsweise auf +19 V, und dann in einem zweiten Spannungssprung beispielsweise auf eine Spannung von +24 V angeregt. Diese Spannungszwischenstufe führt in der Magnetspule 5 zu einer positiven induzierten Spannung, die über die Zeit abfällt, während der Stromfluss mit der Zeit zunimmt. Die Bewegung der Ankerscheibe 7 in Öffnungsrichtung 12 vom Nennluftspalt 20 zum Grundluftspalt 16, wie in der Darstellung der Variation des Luftspalts 11 gezeigt, findet bei kleinen Werten der induzierten Spannung statt und wird in der Strommessung durch eine negative Stromsteigung sichtbar. Mittels des zweiten Spannungssprungs wird wiederum ein Sprung in der induzierten Spannung bewirkt, der über die Zeit abfällt und gleichzeitig einem zunehmenden Stromfluss erzeugt, wobei der zweite Spannungssprung bei bzw. nach Erreichen des Grundluftspalts 16 einsetzt und eine Magnetkraftreserve der Bremse in der geöffneten Position erzeugt.

Beim Verringern der Anregung der Magnetspule 5 wird die Bremsenspannung mittels eines Spannungssprungs auf beispielsweise 12V gesetzt. Somit wird in der Magnetspule 5 eine negative induzierte Spannung erzeugt, die über die Zeit betragsmäßig abfällt, während der Stromfluss mit der Zeit abnimmt. Die eigentliche Bewegung der Ankerscheibe 7 vom Grundluftspalt 16 zum Nennluftspalt 20 in Schließrichtung 13, wie in der Darstellung der Variation des Luftspalts 11 gezeigt, findet bei kleinen Werten der induzierten Spannung statt und wird hier in der Strommessung durch eine positive Stromsteigung sichtbar. Daran anschließend wird die Spannung auf 0 gesetzt, so dass auf die Ankerscheibe 7 nach Erreichen des Nennluftspalts 20 nahezu keine Magnetkraft auf die Magnetspule 5 wirkt.

Hierbei ist für die Steuerung der Ankerscheibe 7 in der Bremse in der bevorzugten Ausführungsform von Vorteil, wenn der Betrag der induzierten Spannung während der Bewegung der Ankerscheibe 7 einen Wert im Bereich von 0 bis zum 1.5-fachen der statischen Anzugsspannung der Federdruckbremse 1 annimmt, so dass sich die Federkraft und die magnetische Kraft in einem Kräfteverhältnis befinden, sodass die Aufprallgeschwindigkeit der Ankerscheibe nur so groß ist, dass für den jeweiligen Anwendungsfall eine ausreichende Geräuschdämpfung erzielt wird.

Eine weitere Betriebsart zur variablen Anregung einer Magnetspule 5 in einer elektromagnetischen Bremse 1 mit steuerbarer Ankerscheibe 7 ist es, eine Spannungsrampe bzw. eine Stromrampe hochzufahren oder eine passende konstante induzierte Spannung an der Magnetspule 5 zu erzeugen. Eine weitere Betriebsart ist es, die Magnetspule 5 mittels mehrerer Spannungssprünge anzuregen. Eine weitere Betriebsart ist die konventionelle Beaufschlagung mit einem Spannungssprung auf Nennspannung bzw. Übererregungsspannung. Eine noch weitere Betriebsart ist es, die Magnetspule 5 mittels mindestens eines Spannungssprungs anzuregen und im Anschluss die variable Anregung einer Magnetspule 5 mittels einer Strom- oder Spannungsrampe weiter zu erhöhen. In Abhängigkeit von der Betriebsart der Federdruckbremse 1 wird der ohmsche Widerstand der Magnetspule 5 vor der variablen Anregung der Magnetspule 5 bestimmt.

Beim Verringern der Anregung der Magnetspule 5 sind entsprechende Betriebsarten möglich, um die Magnetkraft zu verringern und die Ankerscheibe 7 steuerbar in Schließrichtung 13 zu bewegen.

### Bezugszeichenliste

1. Federdruckbremse
2. Spulenträger
3. Innenpol des Spulenträger
4. Außenpol des Spulenträger
5. Magnetspule
6. Druckfeder
6a. Einrichtungen zur Befestigung
6b. Distanz- und Führungselement
7. Ankerscheibe
8. Innenpol der Ankerscheibe
9. Außenpol der Ankerscheibe
10. Halterungen
11. Luftspalt
12. Öffnungsrichtung
13. Schließrichtung
14. Vorrichtung zur radialen Führung
15. Abstandhalter
16. Grundluftspalt
17. Magnetkraft-Luftspalt-Kennlinien bei konstantem magnetischen Fluss
17a. Magnetkraft-Luftspalt-Kennlinie bei konstantem Strom
18. Lokales Minimum
19. Federkraft-Luftspalt-Kennlinie
20. Nennluftspalt
21. Hubbereich
22. Hub
23. Lokales Maximum
24. elektronische Ansteuereinheit
25. Ventile
26. Spannungsversorgung
27. Bewegungstrajektorie
A: Bereich (Mitkopplung)
B: Bereich (Gegenkopplung)
C: Bereich (Mitkopplung)
V1 Ventil 1
V2 Ventil 2
V3 Ventil 3
V4 Ventil 4
U Spannung
I Strom
□ Temperaturfühler

## Patentansprüche

1. Verfahren zur Steuerung einer elektromagnetisch gelüfteten Bremse (1), die einen Spulenträger (2) umfasst, der einen Innenpol (3) und einen Außenpol (4),
eine Magnetspule (5) und mindestens ein weiteres kraftausübendes Element aufweist;
- wobei der Innenpol (3) und der Außenpol (4) des Spulenträgers (2) jeweils eine Oberfläche mit variierendem Gradienten aufweist, sowie
- eine Ankerscheibe (7), die einen Innenpol (8) und einen Außenpol (9) aufweist, wobei die Oberflächen des Innenpols (8) und des Außenpols (9) der Ankerscheibe (7) jeweils komplementär zu den Oberflächen des jeweiligen Innenpols (3) und Außenpols (4) des Spulenträgers (2) passen, sowie einen in der Größe variierenden Luftspalt (11), der einen Hubbereich (21) zwischen einem Grundluftspalt (16) und einem Nennluftspalt (20) bildet;
- wobei die Magnetspule (5) bei Anregung eine Magnetkraft erzeugt und das kraftausübende Element eine zweite Kraft entgegengesetzt zur Magnetkraft der Magnetspule (5) erzeugt,
**dadurch gekennzeichnet, dass:**
das Verhältnis aus Magnetkraft der Magnetspule (5) und der zweiten Kraft des kraftausübenden Elements während der Bewegung der Ankerscheibe (7) im Hubbereich (21) aufgrund einer geeigneten Anregung der Magnetspule (5) mindestens einmal zwischen größer und kleiner eins variiert.

2. Verfahren zur Steuerung einer elektromagnetisch gelüfteten Bremse (1) nach Anspruch 1, **dadurch gekennzeichnet, dass**
- beim Öffnen der Bremse (1) durch geeignete Anregung der Magnetspule (5) eine Magnetkraft erzeugt wird, so dass das Verhältnis aus Magnetkraft der Magnetspule (5) und zweiter Kraft des kraftausübenden Elements größer eins wird und die Ankerscheibe (7) vom Nennluftspalt (20) in Öffnungsrichtung (12) beschleunigt wird;
- die Anregung der Magnetspule (5) während der Bewegung der Ankerscheibe (7) im Hubbereich (21) weiter erhöht wird und das Verhältnis aus Magnetkraft der Magnetspule (5) und zweiter Kraft des kraftausübenden Elements mindestens einmal kleiner eins und die Ankerscheibe (7) mindestens einmal abgebremst wird und den Grundluftspalt (16) mit einstellbarer Geschwindigkeit erreicht;
- die Anregung der Magnetspule (5) weiter erhöht wird, so dass das Verhältnis von Magnetkraft der Magnetspule (5) und zweiter Kraft des kraftausübenden Elements nach Ende der Bewegung wieder größer als eins ist;
- beim Schließen der Bremse (1) durch Variation der Anregung der Magnetspule (5) die Magnetkraft verringert wird, so dass das Verhältnis aus Magnetkraft der Magnetspule (5) und zweiter Kraft des kraftausübenden Elements kleiner eins wird und die Ankerscheibe (7) vom Grundluftspalt (16) in Schließrichtung (13) beschleunigt wird; und
- die Anregung der Magnetspule (5) während der Bewegung der Ankerscheibe (7) im Hubbereich (21) weiter verringert wird und das Verhältnis aus Magnetkraft der Magnetspule (5) und zweiter Kraft des kraftausübenden Elements mindestens einmal größer eins und die Ankerscheibe (7) mindestens einmal abgebremst wird, und die Ankerscheibe (7) den Nennluftspalt (20) mit einstellbarer Geschwindigkeit erreicht;
- und die Anregung der Magnetspule (5) weiter verringert wird, bis das Verhältnis aus Magnetkraft und zweiter Kraft des kraftausübenden Elements nahe Null ist.

3. Verfahren zur Steuerung einer elektromagnetisch gelüfteten Bremse (1) nach Anspruch 1, **dadurch gekennzeichnet, dass** bei der Bewegung der Ankerscheibe (7) im Hubbereich (21) das Verhältnis zwischen Magnetkraft der Magnetspule (5) und zweiter Kraft des kraftausübenden Elements aufgrund einer geeigneten Anregung der Magnetspule (5) zwischen größer eins, kleiner eins und gleich eins variiert, so dass die Ankerscheibe (7) mit einer variablen Kraft beaufschlagt wird.

4. Verfahren zur Steuerung einer elektromagnetisch gelüfteten Bremse (1) nach Anspruch 1, **dadurch gekennzeichnet, dass** bei geschlossener Bremse (1) das Verhältnis zwischen Magnetkraft der Magnetspule (5) und zweiter Kraft des kraftausübenden Elements aufgrund von Variationen in der Anregung der Magnetspule (5) kleiner oder gleich eins ist, so dass die Ankerscheibe (7) mit einer variablen Kraft zur Einstellung eines definierten Drehmoments der Bremse (1) beaufschlagt wird.

5. Verfahren zur Steuerung einer elektromagnetisch gelüfteten Bremse (1) nach Anspruch 1, **dadurch gekennzeichnet, dass** das Verhältnis aus dem Höhenunterschied auf der Oberfläche des Spulenträgers (2) bzw. der Ankerscheibe (7) zum Hub (22) im Bereich von 1.0 bis 4.0 liegt.

6. Verfahren zur Steuerung einer elektromagnetisch gelüfteten Bremse (1) nach Anspruch 1, **dadurch gekennzeichnet, dass** ein Abstandshalter (15) zwischen dem Spulenträger (2) und der Ankerscheibe (7) auf den Poloberflächen (3, 4) des Spulenträgers (2) und/oder auf den Poloberflächen (8, 9) der Ankerscheibe (7) angebracht ist, so dass der Hubbereich (21) verkleinert wird.

7. Verfahren zur Steuerung einer elektromagnetisch gelüfteten Bremse (1) nach Anspruch 6, **dadurch gekennzeichnet, dass** der Abstandshalter (15) eine auf den Poloberflächen (3, 4) des Spulenträgers (2) und / oder den Poloberflächen (8, 9) der Ankerscheibe (7) angeordnete Platte aus nicht magnetisierbarem Material ist, oder der Abstandshalter (15) eine auf den Distanz- oder Führungs-Elementen (6b) der Ankerscheibe (7) angeordnete Scheibe aus zumindest zum Teil nicht magnetisierbarem Material ist, oder als Abstandshalter (15) die Distanz- oder Führungs-Elemente (6b) vorgesehen sind, die zumindest zum Teil aus nicht magnetisierbarem Material bestehen.

8. Verfahren zur Steuerung einer elektromagnetisch gelüfteten Bremse (1) nach Anspruch 6-7, **dadurch gekennzeichnet, dass** der oder die Abstandshalter (15) aus nicht magnetisierbarem polymerem Material bestehen und die zusätzliche Funktion eines einfachen mechanischen Dämpfers übernehmen.

9. Verfahren zur Steuerung einer elektromagnetisch gelüfteten Bremse (1) nach Anspruch 1, **dadurch gekennzeichnet, dass** während der Bewegung der Ankerscheibe (7) der Betrag der induzierten Spannung einen Wert im Bereich von 0 bis zum 1,5-fachen der statisch ermittelten Anzugsspannung der Bremse (1) annimmt.

10. Verfahren zur Steuerung einer elektromagnetisch gelüfteten Bremse (1) nach Anspruch 1 oder 9, **dadurch gekennzeichnet, dass** die Variation der Anregung der Magnetspule (5) mittels eines oder mehrerer Spannungssprünge erfolgt.

11. Verfahren zur Steuerung einer elektromagnetisch gelüfteten Bremse (1) nach Anspruch 1 oder 9, **dadurch gekennzeichnet, dass** die Variation der Anregung der Magnetspule (5) mittels einer Spannungsrampe erfolgt oder, dass die Variation der Anregung der Magnetspule (5) mittels eines oder mehrerer Spannungssprünge in Verbindung mit einer Strom- bzw. Spannungsrampe erfolgt oder, dass die Variation der Anregung der Magnetspule (5) mittels einer Stromrampe erfolgt.

12. Elektromagnetisch gelüftete Bremse (1), die einen Spulenträger (2) umfasst, der einen Innenpol (3) und einen Außenpol (4),
eine Magnetspule (5) und mindestens ein weiteres kraftausübendes Element aufweist;
wobei der Innenpol (3) und der Außenpol (4) des Spulenträgers (2) jeweils eine Oberfläche mit variierendem Gradienten aufweist;
eine Ankerscheibe (7), die einen Innenpol (8) und einen Außenpol (9) aufweist, wobei die Oberflächen des Innenpols (8) und des Außenpols (9) der Ankerscheibe (7) jeweils komplementär zu den Oberflächen des jeweiligen Innenpols (3) und Außenpols (4) des Spulenträgers (2) passen, sowie einen in der Größe variierenden Luftspalt (11), der einen Hubbereich (21) zwischen einem Grundluftspalt (16) und einem Nennluftspalt (20) bildet;
**dadurch gekennzeichnet, dass:**
die Magnetspule (5) bei Anregung eine Magnetkraft erzeugt und das kraftausübende Element eine zweite Kraft entgegengesetzt zur Magentkraft der Magnetspule (5) erzeugt.

13. Elektromagnetisch gelüfteten Bremse (1) nach Anspruch 12, **dadurch gekennzeichnet, dass** die Oberfläche des Innenpols (3) und Außenpols (4) des Spulenträgers (2) eine oder mehrere Stufen oder einen oder mehrere Einstiche und Vorsprünge aufweisen und die Oberfläche des Innenpols (8) und Außenpols (9) der Ankerscheibe (7) einen oder mehrere dazu komplementär passende Stufen oder Einstiche und Vorsprünge aufweisen.

14. Elektromagnetisch gelüfteten Bremse (1) nach Anspruch 12, **dadurch gekennzeichnet, dass** die variierenden Gradienten auf der Oberfläche des Spulenträgers (2) und der Ankerscheibe (7) die Form von konzentrisch zur Mittelachse der Bremse (1) verlaufenden Kreisen aufweisen.

15. Elektromagnetisch gelüfteten Bremse (1) nach Anspruch 12, **dadurch gekennzeichnet, dass** die variierenden Gradienten auf der Oberfläche des Spulenträgers (2) bzw. der Ankerscheibe (7) angeordnet sind, und dass die Kontur der Oberflächen einer beliebigen zwischen dem Spulenraum und der Außenkontur des Spulenträgers liegenden Geometrie folgt.

## Claims

1. A method for controlling an electromagnetic released brake (1), comprising a coil carrier (2) having an internal pole (3) and an external pole (4), a solenoid (5) and at least one further force-exerting element;
- The inner pole (3) and the external pole (4) of the coil carrier (2) each have a surface with a varying gradient, and
- An armature disc (7) which has an internal pole (8) and an external pole (9);
wherein the surfaces of the internal pole (8) and the external pole (9) of the armature disk (7) each complement the surfaces of the respective interal pole (3) and external pole (4) of the coil carrier (2), as well as to form an air gap (11) which varies in size between a basic air gap (16) and a nominal air gap (20) and forms a stroke region (21);
- wherein the solinoid (5) generates a magnetic force when excited and the force-exerting element generates a second force opposite to the magnetic force of the solinoid (5),
**characterized in that:**
the ratio of the magnetic force of the solinoid (5) and the second force of the force-exerting element varies at least once between greater than and smaller than one during the movement of the armature disc (7) in the stroke region (21) owing to the variation of the excitation of the solenoid (5).

2. A method for controlling an electromagnetic released brake (1) according to claim 1, **characterized in that**
- when the brake (1) is opened, a magnetic force is generated by suitable excitation of the solenoid (5), so that the ratio of the magnetic force of the solenoid (5) and the second force of the force-exerting element is greater than one and the armature disk (7) is accelerated from the nominal air gap (20) in the opening direction (12);
- the excitation of the solenoid (5) during the movement of the armature disk (7) in the stroke region (21) is further increased and the ratio of the magnetic force of the magnet coil (5) and the second force of the force-exerting element is at least once less than one and the armature disk (7) is braked at least once and reaches the basic air gap (16) at an adjustable speed;
- the excitation of the solenoid (5) is further increased so that the ratio of the magnetic force of the solenoid (5) and the second force of the force-exerting element is again greater than one after the end of the movement;
- when closing the brake (1) by varying the excitation of the solenoid (5), the magnetic force is reduced, so that the ratio of the magnetic force of the solenoid (5) and the second force of the force-exerting element becomes less than one and the armature disk (7) is accelerated from the basic air gap (16) in the closing direction (13); and
- the excitation of the magnet coil (5) during the movement of the armature disk (7) in the stroke region (21) is further reduced and the ratio of the magnetic force of the magnet coil (5) and the second force of the force-exerting element is at least once greater than one and the armature disk (7) is braked at least once, and the armature disk (7) reaches the nominal air gap (20) at an adjustable speed;
- and the excitation of the solenoid (5) is further reduced until the ratio of the magnetic force and the second force of the force-exerting element is close to zero.

3. A method for controlling an electromagnetically released brake (1) according to claim 1, **characterized in that** open movement of the armature disk (7) in the stroke region (21) the ratio between the magnetic force of the magnet coil (5) and the second force of the force-exerting element varies between greater than one, less than one and equal to one due to a suitable excitation of the solenoid (5), such that the armature disk (7) is subjected to a variable force.

4. A method for controlling an electromagnetically released brake (1) according to claim 1, **characterized in that** when the brake is closed (1) the ratio between the magnetic force of the solenoid (5) and the second force of the force-exerting element due to variations in the excitation of the magnet coil (5) is less than or equal to one, such that the armature disk (7) is subjected to a variable force for setting a defined torque of the brake (1).

5. A method for controlling an electromagnetically released brake (1) according to claim 1, **characterized in that** the ratio of the height difference on the surface of the coil carrier (2) or the armature disk (7) to the stroke (22) lies in the range from 1.0 to 4.0.

6. A method for controlling an electromagnetically released brake (1) according to claim 1, **characterized in that** a spacer (15) is disposed between the coil carrier (2) and the armature disk (7) on the pole surfaces (3, 4) of the coil carrier (2) and / or on the pole surfaces (8, 9) of the armature disk (7), such that the stroke region (21) is reduced.

7. The method for controlling an electromagnetically released brake (1) according to claim 6, **characterized in that** the spacer (15) is a plate made of non-magnetizable material arranged on the pole surfaces (3, 4) of the coil carrier (2) and / or the pole surfaces (8, 9) of the armature disk (7), or the spacer (15) is a slab made of at least partially non-magnetizable material arranged on the spacer or guide elements (6b) of the armature disk (7), or the spacer or guide elements (6b) are provided as the spacer (15), which at least partially consist of non-magnetizable material.

8. A method for controlling an electromagnetically released brake (1) according to claim 6 to 7, **characterized in that** the spacer or spacers (15) consist of non-magnetizable polymeric material and assume the additional function of a simple mechanical damper.

9. A method for controlling an electromagnetically released brake (1) according to claim 1, **characterized in that** during the movement of the armature disk (7) the amount of the induced voltage has a value in the range from 0 to 1.5 times the statically determined tensioning voltage of the brake (1).

10. A method for controlling an electromagnetically released brake (1) according to claim 1 or 9, **characterized in that** the variation of the excitation of the magnet coil (5) is carried out by means of one or more voltage steps.

11. A method for controlling an electromagnetically released brake (1) according to claim 1 or 9, **characterized in that** the variation of the excitation of the solenoid (5) takes place by means of a voltage ramp or that the variation of the excitation of the solenoid (5) occurs by means of one or several voltage jumps in connection with a current or voltage ramp or that the excitation of the solenoid (5) is varied by means of a current ramp.

12. An electromagnetically released brake (1) comprising a coil carrier (2) having an internal pole (3) and an external pole (4), a solenoid (5) and at least one further force-exerting element; the internal pole (3) and the external pole (4) of the coil carrier (2) each having a surface with a varying gradient;
an armature disk (7) having an internal poll (8) and an external pole (9), the surfaces of the internal poll (8) and the external pole (9) of the armature disk (7) each complementary to the surfaces of the respective internal pole (3) and external pole (4) of the coil carrier (2), as well as an air gap (11) which varies in size and which forms a stroke region (21) between a basic air gap (16) and a nominal air gap (20); **characterized in that:** the solenoid (5) generates a magnetic force upon excitation and the force-exerting element generates a second force opposite to the magnetic force of the solenoid (5).

13. An electromagnetically released brake (1) according to claim 12, **characterized in that** the surfaces of the internal pole (3) and the external pole (4) of the coil carrier (2) have one or more steps or one or more recesses and projections and the surface of the internal pole (8) and external pole (9) of the armature disk (7) have one or more steps or recesses and protrusions that complement them.

14. An electromagnetically released brake (1) according to claim 12, **characterized in that** the varying gradients on the surface of the coil carrier (2) and the armature disk (7) have the shape of circles concentric to the central axis of the brake (1).

15. An electro-magnetically released brake (1) according to claim 12, **characterized in that** the varying gradients are arranged on the surface of the coil carrier (2) or the armature disk (7), and that the contour of the surfaces follow any desired geometry between the coil space and the outer contour of the coil carrier.

## Revendications

1. Procédé, destiné à commander un frein (1) à desserrage électromagnétique, qui comprend un porte-bobine (2) comportant un pôle intérieur (3) et un pôle extérieur (4), un solénoïde (5) et au moins un élément supplémentaire exerçant une force ;
- le pôle intérieur (3) et le pôle extérieur (4) du porte-bobine (2) comportant respectivement une surface à gradient variable, ainsi
- qu'un disque d'induit (7), comportant un pôle intérieur (8) et un pôle extérieur (9), les surfaces du pôle intérieur (8) et du pôle extérieur (9) du disque d'induit (7) s'adaptant respectivement de manière complémentaire aux surfaces du pôle intérieur (3) et du pôle extérieur (4) respectifs du porte-bobine (2), ainsi qu'un entrefer (11) de dimension variable, qui forme une zone de course (21) entre un entrefer de base (16) et un entrefer nominal (20) ;
- lors d'une excitation, le solénoïde (5) générant une force magnétique et l'élément exerçant une force générant une seconde force, antagoniste à la force magnétique du solénoïde (5),
**caractérisé en ce que** :
pendant le déplacement du disque d'induit (7) dans la zone de course (21), du fait d'une excitation adaptée du solénoïde (5), le rapport de la force magnétique du solénoïde (5) à la seconde force de l'élément exerçant une force varie au moins une fois entre supérieur et inférieur à un.

2. Procédé, destiné à commander un frein (1) à desserrage électromagnétique (1) selon la revendication 1, **caractérisé en ce que**
- lors de l'ouverture du frein (1) par une excitation adaptée du solénoïde (5) une force magnétique est générée, de sorte que le rapport de la force magnétique du solénoïde (5) à la seconde force de l'élément exerçant une force devienne supérieur à un et que le disque d'induit (7) soit accéléré à partir de l'entrefer nominal (20) dans la direction d'ouverture (12) ;
- l'excitation du solénoïde (5) est encore augmentée pendant le déplacement du disque d'induit (7) dans la zone de course (21) et le rapport de la force magnétique du solénoïde (5) à la seconde force de l'élément exerçant une force devient au moins une fois inférieur à un et le disque d'induit (7) est freiné au moins une fois et atteint l'entrefer de base (16) à vitesse réglable ;
- l'excitation du solénoïde (5) est encore augmentée, de sorte qu'à la fin du déplacement, le rapport de la force magnétique du solénoïde (5) à la seconde force de l'élément exerçant une force soit de nouveau supérieur à un ;
- lors de la fermeture du frein (1), par variation de l'excitation du solénoïde (5), la force magnétique est réduite, de sorte que le rapport de la force magnétique du solénoïde (5) à la seconde force de l'élément exerçant une force devienne inférieur à un et que le disque d'induit (7) soit accéléré à partir de l'entrefer de base (16) dans la direction de fermeture (13) ; et
- pendant le déplacement du disque d'induit (7) dans la zone de course (21), l'excitation du solénoïde (5) est encore réduite et le rapport de la force magnétique du solénoïde (5) à la seconde force de l'élément exerçant une force est au moins une fois supérieur à un et le disque d'induit (7) est freiné au moins une fois, et le disque d'induit (7) atteint l'entrefer nominal (20) à vitesse réglable ;
- et l'excitation du solénoïde (5) est encore réduite, jusqu'à ce que le rapport de la force magnétique à la seconde force de l'élément exerçant une force soit proche de zéro.

3. Procédé, destiné à commander un frein (1) à desserrage électromagnétique (1) selon la revendication 1, **caractérisé en ce que** lors du déplacement du disque d'induit (7) dans la zone de course (21), du fait d'une excitation adaptée du solénoïde (5), le rapport de la force magnétique du solénoïde (5) à la seconde force de l'élément exerçant une force varie entre supérieur à un, inférieur à un et égal à un, de sorte que le disque d'induit (7) soit soumis à une force variable.

4. Procédé, destiné à commander un frein (1) à desserrage électromagnétique (1) selon la revendication 1, **caractérisé en ce que** lorsque le frein (1) est fermé, du fait de variations dans l'excitation du solénoïde (5), le rapport de la force magnétique du solénoïde (5) à la seconde force de l'élément exerçant une force est inférieur ou égal à un, de sorte que le disque d'induit (7) soit soumis à une force variable pour le réglage d'un couple de rotation défini du frein (1).

5. Procédé, destiné à commander un frein (1) à desserrage électromagnétique (1) selon la revendication 1, **caractérisé en ce que** le rapport de la différence de hauteur sur la surface du porte-bobine (2) ou du disque d'induit (7) à la course (22) se situe dans l'ordre de 1.0 à 4.0.

6. Procédé, destiné à commander un frein (1) à desserrage électromagnétique (1) selon la revendication 1, **caractérisé en ce qu'**un espaceur (15) est monté entre le porte-bobine (2) et le disque d'induit (7) sur les surfaces des pôles (3, 4) du porte-bobine (2) et/ ou sur les surfaces des pôles (8, 9) du disque d'induit (7), de sorte que la zone de course (21) soit réduite.

7. Procédé, destiné à commander un frein (1) à desserrage électromagnétique (1) selon la revendication 6, **caractérisé en ce que** l'espaceur (15) est une plaque en matière non magnétisable, placée sur les surfaces des pôles (3, 4) du porte-bobine (2) et / ou sur les surfaces des pôles (8, 9) du disque d'induit (7) ou **en ce que** l'espaceur (15) est un disque en matière au moins partiellement non magnétisable, placé sur les éléments d'écartement ou de guidage (6b) du disque d'induit (7), ou **en ce que** les éléments d'écartement ou de guidage (6b) qui sont constitués au moins partiellement en matière non magnétisable sont prévus en tant espaceurs (15) .

8. Procédé, destiné à commander un frein (1) à desserrage électromagnétique (1) selon la revendication 6 - 7, **caractérisé en ce que** le ou les espaceurs (15) sont constitués d'une matière polymère non magnétisable et assurent la fonction supplémentaire d'un amortisseur mécanique simple.

9. Procédé, destiné à commander un frein (1) à desserrage électromagnétique (1) selon la revendication 1, **caractérisé en ce que** pendant le déplacement du disque d'induit (7), le montant de la tension induite adopte une valeur de l'ordre de 0 jusqu'à 1,5 fois la tension de serrage statiquement déterminée du frein (1).

10. Procédé, destiné à commander un frein (1) à desserrage électromagnétique (1) selon la revendication 1 ou 9, **caractérisé en ce que** la variation de l'excitation du solénoïde (5) s'effectue au moyen d'un ou de plusieurs sauts de tension.

11. Procédé, destiné à commander un frein (1) à desserrage électromagnétique (1) selon la revendication 1 ou 9, **caractérisé en ce que** la variation de l'excitation du solénoïde (5) s'effectue au moyen d'une rampe de tension ou **en ce que** la variation de l'excitation du solénoïde (5) s'effectue au moyen d'un ou de plusieurs sauts de tension, en association avec une rampe de courant ou de tension, ou **en ce que** la variation de l'excitation du solénoïde (5) s'effectue au moyen d'une rampe de courant.

12. Frein (1) à desserrage électromagnétique, qui comprend un porte-bobine (2) comportant un pôle intérieur (3) et un pôle extérieur (4), un solénoïde (5) et au moins un élément supplémentaire exerçant une force ;
le pôle intérieur (3) et le pôle extérieur (4) du porte-bobine (2) comportant respectivement une surface à gradient variable ;
un disque d'induit (7), comportant un pôle intérieur (8) et un pôle extérieur (9), les surfaces du pôle intérieur (8) et du pôle extérieur (9) du disque d'induit (7) s'adaptant respectivement de manière complémentaire aux surfaces du pôle intérieur (3) et du pôle extérieur (4) respectifs du porte-bobine (2), ainsi qu'un entrefer (11) de dimension variable, qui forme une zone de course (21) entre un entrefer de base (16) et un entrefer nominal (20) ;
**caractérisé en ce que** :
lors d'une excitation, le solénoïde (5) génère une force magnétique et l'élément exerçant une force génère une seconde force, antagoniste à la force magnétique du solénoïde (5).

13. Frein (1) à desserrage électromagnétique (1) selon la revendication 12, **caractérisé en ce que** la surface du pôle intérieur (3) et du pôle extérieur (4) du porte-bobine (2) comportent un ou plusieurs échelons ou une ou plusieurs gorges et saillies et la surface du pôle intérieur (8) et du pôle extérieur (9) du disque d'induit (7) comportent un ou plusieurs échelons ou gorges et saillies s'adaptant de manière complémentaire à ces derniers.

14. Frein (1) à desserrage électromagnétique (1) selon la revendication 12, **caractérisé en ce que** les gradients variables sur la surface du porte-bobine (2) et du disque d'induit (7) présentent la forme de cercles s'étendant de manière concentrique à l'axe médian du frein (1).

15. Frein (1) à desserrage électromagnétique (1) selon la revendication 12, **caractérisé en ce que** les gradients variables sont placés sur la surface du porte-bobine (2) ou du disque d'induit (7) et **en ce que** le contour des surfaces suit une géométrie quelconque, se situant entre la chambre de bobine et le contour extérieur du porte-bobine.
